# EUROPÄISCHE PATENTSCHRIFT

(11) **EP 1 564 187 B1**
(45) Veröffentlichungstag und Bekanntmachung des Hinweises auf die Patenterteilung: **27.10.2010**
(21) Anmeldenummer: 05003149.1
(22) Anmeldetag: 15.02.2005
(51) Int. Cl.: C02F 1/461, C02F 1/40, C02F 1/72

(54) **Verfahren zum Verringern des Gehaltes von Speiseölen und Speisefetten in Abwässern**
Process for reducing the quantity of oil and fat in waste water
Procédé de réduction de la quantité de gras et huile dans l'eau résiduaire

(30) Priorität: 16.02.2004 DE 102004007363; 16.06.2004 DE 102004029874
(43) Veröffentlichungstag der Anmeldung: 17.08.2005
(73) Patentinhaber: Lenthe, Michael, 75331 Engelsbrand (DE); Tränkle, Reinhold K., 71640 Ludwigsburg (DE)
(72) Erfinder: Lenthe, Michael, 75331 Engelsbrand (DE); Tränkle, Reinhold K., 71640 Ludwigsburg (DE)
(74) Vertreter: Twelmeier Mommer & Partner

(56) Entgegenhaltungen:
- US-A- 5 399 247
- US-A- 5 531 865
- US-A1- 2003 141 202
- PATENT ABSTRACTS OF JAPAN Bd. 2003, Nr. 12, 5. Dezember 2003 (2003-12-05) & JP 2003 236544 A (KURITA WATER IND LTD), 26. August 2003 (2003-08-26)

## Beschreibung

Die Erfindung befasst sich mit dem Problem der Verringerung des Gehalts von Speiseölen und Speisefetten in Abwässern. Insbesondere geht es um Abwässer aus Großküchen und Gastronomieküchen. Dort fallen nicht nur Spülwässer an, in denen Öle und Fette emulgiert sind. Hinzu kommen auch Fette aus Friteusen und Brattöpfen, die in den Abwässern nicht oder nur teilweise emulgiert sind und zum Rest aufschwimmen. Sie enthalten auch Feststoffe, durch deren Einbindung sie zäher und fester werden. Vor allem Speisefette neigen dazu, sich in Abwasserleitungen abzulagern. Diese Neigung besteht um so mehr, je zäher und fester ihre Konsistenz ist; bei Speisefetten ist diese Neigung besonders ausgeprägt. Fettablagerungen aus Abwässern verengen die Abwasserleitungen allmählich, so dass diese irgendwann die anfallenden Abwassermengen nicht mehr bewältigen können. Die Reinigung der Abwasserleitungen von Fettablagerungen ist jedoch schwierig und aufwendig. Deshalb wurde auf dem Verordnungswege für den Fettgehalt in Abwässern, die in öffentliche Abwasserleitungen eingeleitet werden, ein Grenzwert festgesetzt. Danach dürfen in Deutschland nur solche Abwässer in die öffentlichen Abwasserleitungen eingeleitet werden, deren Fettgehalt unter 50 mg pro Liter liegt. Mit herkömmlichen Fettabscheidern wird das nicht erreicht.

Fettabscheider sind statische Geräte, in denen das fetthaltige Abwasser in einem Überlaufbehälter gesammelt und beruhigt wird, so dass das Fett aufschwimmt, während schwerere Stoffe auf den Boden des Abscheiders absinken können und dort einen Sumpf bilden. Das aufgeschwommene Fett wird durch Überlaufen aus dem Behälter abgeschöpft. Das Sediment, welches sich im Sumpf des Behälters abgelagert hat, wird von Zeit zu Zeit abgesaugt. Das auf diese Weise gereinigte Abwasser verläßt den Fettabscheider mit einem Fettgehalt von > 200 mg/L schwerflüchtige lipophile Stoffe.

Fettabscheider sind als statische Geräte verhältnismäßig preiswert und damit auch für Gastronomiebetriebe erschwinglich. Sie erfüllen aber leider nicht den vorgeschriebenen Grenzwert. Außer solchen statischen Fettabscheidern sind auch noch sogenannte Flotationsgeräte Stand der Technik, in denen Fette ausgefällt werden. Solche Flotationsgeräte kosten jedoch 15.000,00 EUR und mehr, was für viele Gastronomiebetriebe unerschwinglich ist. Zum Stand der Technik wird auf den Aufsatz von Daniela Bock und Dr.-Ing. Uwe Menzel "Untersuchungen zur Behandlung von Küchenabwässern mit organischen Inhaltsstoffen" Institut für Siedlungswasserbau, Wassergüte- und Abfallwirtschaft der Universität Stuttgart hingewiesen.

Der vorliegenden Erfindung liegt die Aufgabe zugrunde einen Weg aufzuzeigen, wie der Gehalt von Speisefetten und Speiseölen in Abwässern auf kostengünstige Weise unter den vorgeschriebenen Grenzwert von 50 mg pro Liter abgesenkt werden kann.

Diese Aufgabe wird gelöst durch ein Verfahren mit den im Patentanspruch 1 angegebenen Merkmalen. Vorteilhafte Weiterbildungen der Erfindung sind Gegenstand der Unteransprüche.

Erfindungsgemäß wird der Gehalt des Abwassers aus Küchen an Speisefetten und Speiseölen dadurch reduziert, dass diese durch elektrolytische Oxidation unter Verwendung von Elektroden die mit Diamant beschichtet sind, wenigstens teilweise abgebaut werden. Das erfindungsgemäße Verfahren wird nicht anstelle eines Fettabscheiders eingesetzt, sondern in Ergänzung dazu, um das vom Fettabscheider kommende vorgereinigte Abwasser zu behandeln. Dabei entstehen Verbindungen, die nicht mehr zu haftenden, fettigen und schmierigen Ablagerungen führen. Das hat wesentliche Vorteile:
- Mit den Abbauprodukten kann das Abwasser gefahrlos in eine öffentliche Abwasserleitung eingeleitet werden.
- Der vorgeschriebene Grenzwert für den Fettgehalt im Abwasser kann eingehalten werden.
- Speiseöle und Speisefette, die abgebaut worden sind, müssen nicht mehr entsorgt werden.

Zum elektrolytischen Oxidieren der Speisefette und Speiseöle im Abwasser verwendet man eine Elektrolysezelle, in welcher man das Abwasser chargenweise behandeln kann, vorzugsweise jedoch im Durchlauf behandelt. Für die elektrolytische Oxidation ist es günstig, dass das Abwasser durch einen Salzgehalt aus der Speisenzubereitung bereits eine hinreichende elektrische Leitfähigkeit aufweist. Bei der Elektrolyse entstehen durch Überspannung OH-Radikale, die eine Oxidation der Fettsäuren bewirken. Für das erfindungsgemäße Verfahren werden mit Diamant beschichtete Elektroden verwendet. Sie sind in diesem Anwendungsfall hinreichend beständig.

Ergänzend zur elektrolytischen Oxidation kann das Abwasser mit ultraviolettem Licht bestrahlt werden. Diese Weiterbildung des Verfahrens hat besondere Vorteile:
- Es handelt sich um ein physikalisches Verfahren. Es ist kein Einsatz von problematischen Chemikalien erforderlich. Deshalb muss ach der Anwender des Verfahrens nicht mit für ihn problematischen Chemikalien hantieren und das Abwasser muss nicht auf das Einhalten von Grenzwerten für solche Chemikalien überwacht werden.
- Das Verfahren ist einfach in der Handhabung.
- Das Verfahren ist preiswert. Preiswerte UV-Strahler sind handelsüblich. Sie können in ein Gefäß eingebaut werden, in welchem das Abwasser im Durchlauf oder chargenweise im Durchlauf bestrahlt wird.

Die Einwirkung von UV-Licht, welche die elektrolytische Oxidation ergänzen kann, setzt in Anwesenheit eines Oxidationsmittels den Gehalt an schädlichen Fetten und Ölen im Abwasser zusätzlich herab. Vorzugsweise wird dem Abwasser als Oxidationsmittel Sauerstoff zugeführt.

Es ist möglich und durchaus vorteilhaft, dass gleichzeitig mit der elektrolytischen Oxidation mit einem Oxidationsmittel auf das Abwasser eingewirkt wird. Vorzugsweise wird dem Abwasser als Oxidationsmittel Sauerstoff zugeführt. Das ist erstens preiswert, zweitens ungefährlich und drittens wirksam. Vorzugsweise stammt der Sauerstoff aus einer zugesetzten H₂O₂-Lösung.

Das Abwasser wird während der ergänzenden Bestrahlung mit UV-Licht vorzugsweise in Turbulenz versetzt, weil es die Wirksamkeit der Bestrahlung steigert und die erforderliche Dauer der Bestrahlung vermindert. Turbulenz kann durch Einleiten von Druckluft erzeugt werden, oder dadurch, dass das Abwasser mechanisch verwirbelt wird, oder dadurch, dass es durch eine mit Schikanen bestückte Strecke gepumpt wird. Ein Beispiel dafür ist die Verwendung eines statischen Mischers.

Ein statischer Mischer ist im einfachsten Falle in durchströmtes Rohr, welches von der Rohrwand abstehende Leiterbleche hat, welche der Strömung eine Turbulenz aufzwingen. In den Mischer leitet man zweckmäßigerweise auch Sauerstoff oder Luft ein, welche durch den Mischvorgang gut im Abwasser verteilt wird.

Fallen größere Mengen Abwasser an, ist es zweckmäßig, das Abwasser im Durchlauf zu behandeln. Fallen geringere Mengen Abwasser an, kann es vorteilhafter sein, das Abwasser in einem Behälter zu sammeln und es darin chargenweise im Durchlauf zu behandeln. Dabei kann es in dem Behälter in Turbulenz versetzt werden. Durch ein Tauchrohr kann das Abwasser zusätzlich belüftet werden. Dadurch erhalten entstehende Reaktionsprodukte Gelegenheit, mit dem Luftsauerstoff zu reagieren.

Eine vorteilhafte Variante des Verfahrens besteht darin, dass in einer chargenweisen Behandlung das Medium wiederholt durch einen Reaktor strömt, in dem die Behandlung stattfindet. Das Abwasser wird solange umgewälzt werden, bis der gewünschte Restgehalt an Speisefetten und Speiseölen im Abwasser erreicht ist.

Die Oxidation kann mit Vorteil durch Verwendung eines Oxidationskatalysators begünstigt werden. Der Oxidationskatalysator wird jedoch zweckmäßigerweise nicht dem Abwasser zugegeben, sondern als Bauteil oder als Beschichtung eines

Bauteils eingesetzt, welches vom Abwasser benetzt wird, so dass die im Abwasser mitgeführten Reaktionsprodukte mit dem Oxidationskatalysator in Berührung kommen können und eine Oxidation ausgelöst oder beschleunigt wird. Besonders günstig ist es, wenn die Wände und/oder Einbauten eines vom Abwasser durchströmten Mischers mit dem Oxidationskatalysator beschichtet sind, weil der Katalysator sich dann genau dort befindet, wo die günstigsten Reaktionsbedingungen herrschen. Besonders bevorzugt ist es, den Oxidationskatalysator und einen oder mehrere UV-Strahler, welche die elektrolytische Oxidation ergänzen, so anzuordnen, dass der Oxidationskatalysator ebenfalls mit UV-Licht bestrahlt wird. Der Oxidationskatalysator kann auch den Zerfall von zugesetztem H₂O₂ beschleunigen; dafür kommen u. a. Edelmetalle infrage.

Der Oxidationskatalysator verändert sich durch die Reaktion selbst nicht, sondern beschleunigt sie. Er wird nicht oder allenfalls in unbedeutender Menge vom Abwasser mitgenommen.

Zusammenfassend läßt sich feststellen, dass das erfindungsgemäße Verfahren auch für kleinere Gastronomiebetriebe wirtschaftlich und so gefahrlos anzuwenden ist, dass es auch von ungelernten Hilfskräften angewendet werden kann.

## Patentansprüche

1. Verfahren zur Verminderung des Gehaltes von Speisefetten und Speiseölen in Abwasser aus Großküchen und Gastronomieküchen durch Abscheiden von Fett gefolgt von einem wenigstens teilweisen Abbau der Speisefette und Speiseöle durch elektrolytische Oxidation, wobei die Elektrolyse mit Elektroden durchgeführt wird, welche mit Diamant beschichtet sind.

2. Verfahren nach Anspruch 1, **dadurch gekennzeichnet, dass** die Elektrolyse in einer Elektrolysezelle durchgeführt wird, welche im Durchfluss betrieben wird.

3. Verfahren nach Anspruch 1, **dadurch gekennzeichnet, dass** das Abwasser chargenweise in einem Behälter behandelt wird.

4. Verfahren nach Anspruch 1, **dadurch gekennzeichnet, dass** das Abwasser chargenweise in einer abgegrenzten Zone behandelt wird und dabei die jeweilige Charge so umgewälzt wird, dass sie wiederholt durch die abgegrenzte Zone strömt.

5. Verfahren nach einem der vorstehenden Ansprüche, **dadurch gekennzeichnet, dass** gleichzeitig mit einem Oxidationsmittel auf das Abwasser eingewirkt wird.

6. Verfahren nach Anspruch 5, **dadurch gekennzeichnet, dass** dem Abwasser eine H₂O₂ Lösung zugesetzt wird.

7. Verfahren nach einem der vorstehenden Ansprüche, **dadurch gekennzeichnet, dass** das Abwasser während der Behandlung in Turbulenz versetzt wird.

8. Verfahren nach Anspruch 7, **dadurch gekennzeichnet, dass** das Abwasser **dadurch** in Turbulenz versetzt wird, dass man es durch einen statischen Mischer leitet.

9. Verfahren nach einem der vorstehenden Ansprüche, **dadurch gekennzeichnet, dass** das Abwasser während der Behandlung mit einem Oxidationskatalysator in Verbindung gebracht wird.

10. Verfahren nach Anspruch 9, **dadurch gekennzeichnet, dass** sich der Oxidationskatalysator auf einem Bauteil befindet oder ein Bauteil bildet, welches von dem Abwasser benetzt wird.

11. Verfahren nach Anspruch 8 und 9 oder 10, **dadurch gekennzeichnet, dass** die Wände und/oder Einbauten des Mischers mit dem Oxidationskatalysator beschichtet sind.

## Claims

1. Method of reducing the content of edible fats and edible oils in waste water from canteen kitchens and from kitchens in restaurants by separating fat followed by an at least partial decomposition of the edible fats and edible oils by electrolytic oxidation, wherein the electrolytic process is performed with electrodes which are diamond coated.

2. Method according to claim 1, **characterized in that** the electrolytic process is performed in an electrolytic cell which is operated while the waste water is circulated through the cell.

3. Method according the claim 1, **characterized in that** the waste water is treated in a vessel by batch processing.

4. Method according to claim 1, **characterized in that** the waste water is treated by batch processing in a delimited zone and that the actual charge is so recirculated that it flows repeatedly through the delimited zone.

5. Method according to any of the preceding claims, **characterized in that** at the same time the waste water is treated by an oxidizing agent.

6. Method according to claim 5, **characterized in that** a H₂O₂ solution is added to the waste water.

7. Method according to any of the preceding claims, **characterized in that** the waste water is agitated to become turbulent while being treated.

8. Method according to claim 7, **characterized in that** the waste water is passed through a static mixer to effect its turbulence.

9. Method according to any of the preceding claims, **characterized in that** during treatment thereof the waste water is brought into contact with an oxidation catalyst.

10. Method according to claim 9, **characterized in that** the oxidation catalyst is provided on a component or constitutes a component which is wetted by the waste water.

11. Method according to claim 8 and 9 or 10, **characterized in that** the walls and/or the internal components of the mixer are coated with the oxidation catalyst.

## Revendications

1. Procédé pour réduire la teneur en graisses alimentaires et en huiles alimentaires des eaux usées provenant de cuisines industrielles et de cuisines professionnelles, par précipitation de la graisse suivie d'une décomposition au moins partielle des graisses alimentaires et des huiles alimentaires par oxydation électrolytique, l'électrolyse étant mise en oeuvre avec des électrodes qui sont recouvertes de diamant.

2. Procédé selon la revendication 1, **caractérisé en ce que** l'électrolyse est mise en oeuvre dans une cellule électrolytique qui est entraînée en circulation.

3. Procédé selon la revendication 1, **caractérisé en ce que** les eaux usées sont traitées en discontinu dans un récipient.

4. Procédé selon la revendication 1, **caractérisé en ce que** les eaux usées sont traitées dans une zone délimitée, la charge respective étant mise en circulation de telle sorte qu'elle s'écoule de manière répétée à travers la zone délimitée.

5. Procédé selon l'une quelconque des revendications précédentes; **caractérisé en ce qu'**on agit de manière simultanée avec un agent d'oxydation sur les eaux usées.

6. Procédé selon la revendication 5, **caractérisé en ce qu'**on ajoute aux eaux usées une solution de H₂O₂.

7. Procédé selon l'une quelconque des revendications précédentes, **caractérisé en ce qu'**on génère des turbulences dans les eaux usées au cours du traitement.

8. Procédé selon la revendication 7, **caractérisé en ce qu'**on génère des turbulences dans les eaux usées en guidant celles-ci à travers un mélangeur statique.

9. Procédé selon l'une quelconque des revendications précédentes, **caractérisé en ce qu'**on met les eaux usées au cours du traitement en contact avec un catalyseur par oxydation.

10. Procédé selon la revendication 9, **caractérisé en ce que** le catalyseur par oxydation se trouve sur un composant ou forme un composant qui est mouillé par les eaux usées.

11. Procédé selon les revendications 8 et 9 ou 10, **caractérisé en ce que** les parois et/ou les chicanes du mélangeur sont recouvertes du catalyseur par oxydation.
